# FASCICULE DE BREVET EUROPEEN

(11) **EP 3 092 392 B1**
(45) Date de publication et mention de la délivrance du brevet: **20.03.2019**
(21) Numéro de dépôt: 14828220.5
(22) Date de dépôt: 16.12.2014
(51) Int. Cl.: F02M 35/10, F02D 41/00, F02D 41/24, F02D 9/02

(54) **PROCÉDÉ D'OPTIMISATION DU FONCTIONNEMENT D'UN MOTEUR DE VÉHICULE POUR OBTENIR UNE DÉPRESSION DONNANT UN FREINAGE SÉCURITAIRE**
VERFAHREN ZUR OPTIMIERUNG DES BETRIEBS EINES FAHRZEUGMOTORS ZUR GEWINNUNG EINES VAKUUMS FÜR NOTBREMSUNG
METHOD FOR OPTIMIZING THE OPERATION OF A VEHICLE ENGINE IN ORDER TO OBTAIN A VACUUM THAT PROVIDES EMERGENCY BRAKING

(30) Priorité: 07.01.2014 FR 1450061
(43) Date de publication de la demande: 16.11.2016
(73) Titulaire: PSA Automobiles SA, 78300 Poissy (FR)
(72) Inventeur: CHAUNUT, Francois, 92400 Courbevoie (FR); CHIQUET, Stephanie, 91240 St Michel sur Orge (FR); LESTINI, Lisa, 92400 Courbevoie (FR)
(74) Mandataire: Bourguignon, Eric Pascal Jean
(86) Numéro de dépôt international: PCT/FR2014/053371
(87) Numéro de publication internationale: WO 2015/104473

(56) Documents cités:
- EP-A2- 1 681 219
- WO-A2-2008/081296
- US-A1- 2007 251 217
- US-A1- 2013 131 944

## Description

La présente invention concerne un procédé d'optimisation du fonctionnement du groupe motopropulseur pour sécuriser l'assistance de freinage, ainsi qu'un véhicule automobile comprenant des moyens mettant en oeuvre un tel Un exemple de l'état de la technique est divulgué dans la publication WO2008/081296.

Les véhicules automobiles comportent un système de freinage hydraulique commandé par une pédale de frein, appliquant une pression sur des moyens de freinage générant un couple de freinage sur chaque roue du véhicule.

Afin de limiter l'effort délivré par le conducteur sur la pédale de frein, ces systèmes de freinage sont généralement équipés d'une assistance à dépression comprenant un amplificateur disposant d'un boîtier étanche, appelé aussi « Mastervac », comportant une membrane soumise à une dépression fournissant un effort d'assistance qui s'ajoute à celui appliqué par le conducteur.

La membrane du boîtier sépare deux volumes comportant au repos la même dépression. Lors du freinage un volume se remplit d'air à la pression atmosphérique en fonction de la charge appliquée sur la pédale de frein, la différence de pression sur les deux faces de la membrane générant alors la force d'assistance. Il faut ensuite après le freinage, refaire le vide dans ce volume avec un générateur de vide.

Par ailleurs, les moteurs thermiques à essence comportent dans les tubulures d'admission un papillon d'ouverture des gaz d'admission, qui génère en aval quand il est suffisamment fermé, une dépression due à l'aspiration de l'air dans les chambres de combustion.

La dépression dépend du niveau de fermeture du papillon, ainsi que de la vitesse de rotation du moteur. On utilise cette dépression pour faire le vide dans le boîtier de l'amplificateur, en le reliant aux tubulures d'admission par une canalisation.

Toutefois, dans certaines conditions de vie comprenant une faible vitesse de rotation du moteur proche du ralenti, on peut après des freinages obtenir une génération de vide dans l'amplificateur qui n'est pas assez rapide pour assurer une assistance suffisante donnant un freinage sécuritaire.

Dans ce cas, un procédé connu de contrôle du moteur, présenté notamment par le document US-A1-20120116656, effectue, quand le niveau de vide dans l'amplificateur est estimé insuffisant, une modification du fonctionnement de ce moteur, notamment en variant la synchronisation de l'arbre à cames pour un moteur disposant de soupapes à ouverture variable « VVT ».

Toutefois, ce document ne présente pas de procédé simple pour gérer une optimisation de la durée de ce type de modification. On peut obtenir alors avec ce fonctionnement modifié des inconvénients comme une diminution du confort, des pertes de rendement ou des émissions polluantes dégradées, sur un temps plus long que nécessaire.

La présente invention a notamment pour but d'éviter ces inconvénients de la technique antérieure.

Elle propose à cet effet un procédé d'optimisation du fonctionnement d'un moteur à essence d'un véhicule automobile, permettant d'obtenir une dépression suffisante dans ce moteur appliquée à une assistance du système de freinage, lors des faibles vitesses de rotation du moteur, afin d'obtenir un freinage sécuritaire, caractérisé en ce qu'à partir d'une détection d'un seuil de vide critique dans l'amplificateur de l'assistance, il applique une action d'optimisation du fonctionnement du moteur en agissant sur un ou plusieurs facteurs ajustables qui permettent de générer une dépression plus importante, pendant un temps réglé par une temporisation qui est calibrée en fonction d'une durée de récupération de la dépression.

Un avantage de ce procédé d'optimisation est qu'on peut limiter la durée d'application de l'action d'optimisation au temps minimum nécessaire adapté au véhicule concerné en particulier, ce qui permet de réduire les inconvénients entraînés par l'application de ce procédé.

Le procédé d'optimisation selon l'invention peut de plus comporter une ou plusieurs des caractéristiques suivantes, qui peuvent être combinées entre elles.

En particulier, les facteurs ajustables comporte au moins l'un des moyens parmi une machine tournante appliquant un couple de charge réglable sur le moteur, comme un alternateur ou un compresseur de climatisation, un élément de contrôle du moteur comme des soupapes à synchronisation variable « VVT » ou une montée de la vitesse du ralenti, ou un délestage de la consommation de courant du véhicule.

Avantageusement, le seuil de vide critique est calibrable.

L'amplificateur comportant un capteur de pression, avantageusement après une première action d'optimisation permettant de passer sous un premier seuil de vide critique, un second freinage ayant entraîné une deuxième action d'optimisation, si à la fin de la temporisation de cette deuxième action la pression constatée se trouve au-dessus de ce premier seuil, le procédé fixe alors cette pression constatée si celle-ci reste sécuritaire, comme nouveau seuil de vide critique.

L'amplificateur ne comportant pas de capteur de pression, avantageusement le procédé fait une estimation du niveau dans l'amplificateur en calculant la différence entre la pression atmosphérique et la pression des tubulures d'admission du moteur, cette différence étant ensuite comparée au seuil de vide calibrable.

Dans ce cas, par rapport à une demande d'action d'optimisation brute, la demande d'action d'optimisation finale étant effective pendant la temporisation initiale, le procédé définit des temporisations d'attente avant de relancer un nouveau cycle d'action d'optimisation.

On comprend par demande d'action d'optimisation « brute » la demande correspondant à l'estimation du vide, elle est donc peu précise. On comprend par demande d'action d'optimisation « finale » la demande correspondant à la demande « brute » filtrée par les temporisations afin d'éviter un délestage permanent qui serait dû à l'imprécision de l'estimation. Les temporisations sont fonction de la situation de vie. En effet, sans utilisation d'un capteur de mesure de pression, il est difficile de savoir précisément le niveau de vide. Avec cette estimation, il se peut que le conducteur se retrouve dans une situation où la stratégie demande en permanence un délestage des accessoires, et, de ce fait, dégrade les prestations du véhicule. Afin d'éviter ce délestage permanent, une stratégie de cyclage est mise en place pour optimiser les demande de délestage en fonction de plusieurs paramètres. Par rapport à la demande « brute », la demande de délestage « finale » sera effective pendant un temps calibrable, une temporisation d'attente étant définie avant de relancer un cycle de délestage. Il y a, avantageusement, trois temporisations d'attente : la pédale de frein « off » (non appuyée), la pédale de frein « on » (activée) à vitesse faible et la pédale de frein « on » à vitesse élevée.

De préférence, les demandes de délestage « brutes » sont réinitialisées lors des transitions de pédale de frein de « on » à « off » et de « off » à « on ».

Les temporisations d'attente peuvent comporter dans l'ordre comprenant une durée de plus en plus courte, une première temporisation pour une vitesse faible et sans appui sur le frein, une deuxième temporisation pour une vitesse faible et avec un appui sur le frein, et une troisième temporisation pour une vitesse plus importante et un appui sur le frein, les demandes d'actions étant systématiquement réinitialisées lors des transitions du freinage qui est activé ou désactivé.

Avantageusement, la temporisation est calibrée en fonction d'une durée de récupération mesurée pendant le fonctionnement du véhicule, permettant de récupérer le niveau de pression initiale après un freinage avec une action d'optimisation.

Dans ce cas, à chaque front descendant de l'appui sur les freins, on peut ajouter un temps supplémentaire prédéfini à la temporisation calibrée initiale.

L'invention a aussi pour objet un véhicule automobile disposant d'un moteur à essence produisant un vide pour l'appliquer à une assistance à dépression du système de freinage, ce véhicule comportant des moyens mettant en oeuvre un procédé d'optimisation du fonctionnement de ce moteur, comprenant l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
la figure 1 est un schéma d'un moteur à essence relié à une assistance à dépression ;
la figure 2 est un schéma présentant les principales étapes d'une fonction mettant en oeuvre le procédé d'optimisation selon l'invention ;
la figure 3 est un schéma présentant le procédé d'optimisation pour un amplificateur de l'assistance disposant d'un capteur de pression ; et
les figures 4 à 7 sont des graphiques présentant en fonction du temps successivement le procédé pour un amplificateur avec et sans capteur de pression, et le calibrage de la temporisation avec un seul coup de frein ou avec plusieurs coups rapprochés.

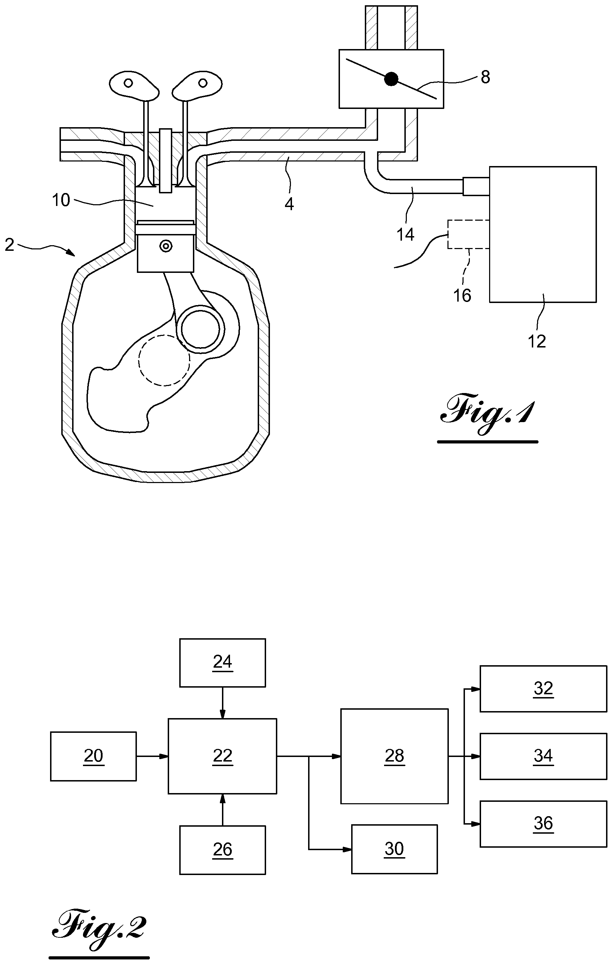

La figure 1 présente un moteur thermique 2 alimenté en air par un conduit 4 prélevant cet air à la pression atmosphérique, qui comporte un papillon motorisé d'ouverture des gaz d'admission 8 réglant le débit d'air admis dans les chambres de combustion.

Le système de freinage du véhicule comporte un boîtier amplificateur à dépression 12 interposé entre la pédale de frein et le maître-cylindre hydraulique, recevant la dépression par une canalisation 14 connectée sur le conduit d'admission 4 en aval du papillon motorisé 8, pour générer une force d'assistance s'ajoutant à celle fournie par la pédale.

En option, certains amplificateurs comportent un capteur de dépression 16 permettant de mesurer le niveau de dépression interne.

La dépression dans le conduit d'admission 4 dépend de l'ouverture du papillon 8, et de la vitesse de rotation du moteur 2. Une ouverture plus faible de ce papillon 8 ou une vitesse de rotation plus élevée, entraîne une dépression plus importante qui produit plus rapidement le vide dans l'amplificateur 12. Pour les vitesses de rotation moteur, les situations où la dépression peut être insuffisante sont au niveau du ralenti moteur, c'est-à-dire pour un ordre de grandeur des vitesses de rotation moteur comprise entre 750 tr/min et 950 tr/min.

Le moteur thermique 2 comporte des facteurs ajustables permettant après une action d'optimisation de son fonctionnement, de faire varier au ralenti la dépression dans l'admission. Ces facteurs peuvent être en particulier un délestage d'accessoires comprenant une machine tournante appliquant un couple de charge sur ce moteur, comme un alternateur piloté, ou un compresseur de climatisation à couple ajustable par exemple avec un embrayage d'entrée ou une cylindrée variable, ce délestage augmentant alors la dépression en réduisant le couple de charge.

Ces facteurs ajustables peuvent être aussi des éléments de contrôle de ce moteur, comme des soupapes à synchronisation variable « VVT » ou une montée de la vitesse du ralenti qui augmente la production de vide, ou un délestage de la consommation de courant du véhicule.

La figure 2 présente une première étape 20 qui détermine suivant le fonctionnement du groupe motopropulseur et du véhicule, et de conditions extérieures, les besoins de vide qui sont les situations de vie où le moteur risque de ne pas pouvoir générer un vide suffisant pour assurer un freinage sécuritaire.

Le but de cette étape 20 est de discriminer ces situations de vie spécifiques pour ne pas demander de manière trop fréquente une mise en oeuvre de la stratégie d'optimisation du fonctionnement du moteur, afin par exemple de ne pas priver le client de la climatisation alors que ce n'était pas nécessaire.

Pour déterminer ces situations de vie, la première étape 20 utilise des informations comme par exemple les freinages effectués, la position de la pédale d'accélérateur, la pression atmosphérique, la vitesse du véhicule ou l'activation de la direction assistée.

La première étape 20 envoie un signal à une deuxième étape 22 de coordination des demandes des actions d'optimisation, qui reçoit un signal d'une étape déterminant le besoin de vide, prenant un premier modèle 24 dans le cas où l'amplificateur comporte un capteur de pression, ou un autre modèle 26 dans le cas où il ne comporte pas de capteur.

Le but est de déterminer le moment où la réserve de vide dans l'amplificateur conjuguée avec la possibilité de génération du vide par le moteur, n'est plus suffisante pour garantir une prestation de freinage sécuritaire.

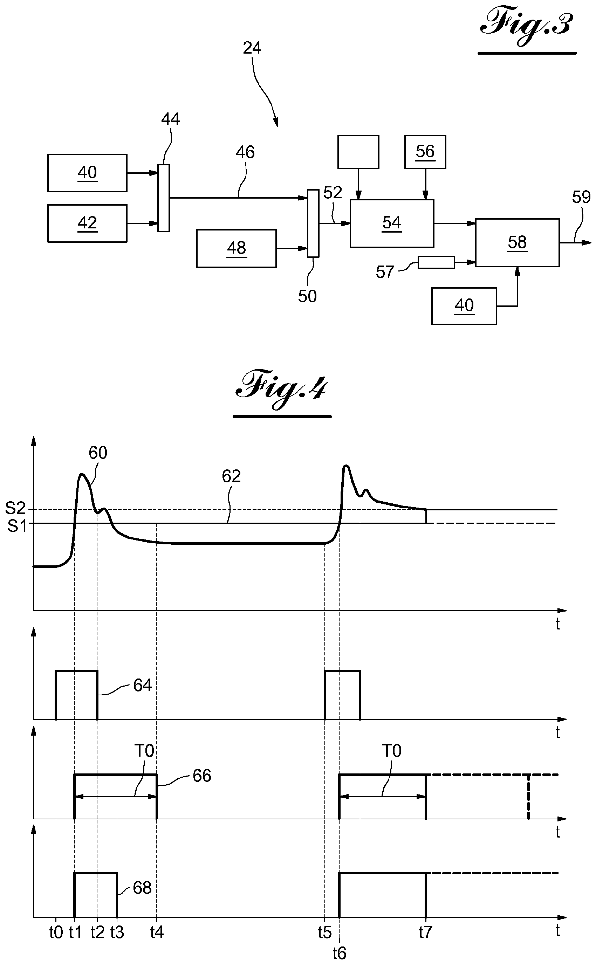

La figure 3 présente la stratégie de l'étape pour un amplificateur comportant un capteur de pression 24, quand le niveau de pression passe en-dessous d'un seuil critique calibrable afin d'activer la stratégie de besoin de vide.

Le seuil critique est à chaque instant le maximum 50 entre un seuil de pression calibrable 48 relatif à la décélération sécuritaire pour le véhicule, et la dépression maximum 46 que peut fournir au même instant le moteur. Cette dépression maximum que peut fournir le moteur 46 est elle-même le maximum 44 entre la pression relevée au niveau de l'amplificateur 40, et une calibration 42 relative à la pression maximum que peut produire le moteur.

La stratégie possède une étape de mémorisation 54 afin de ne pas activer le besoin de vide en permanence si le moteur n'est pas capable de générer plus de vide. Cette mémorisation 54 sera active à la fin de chaque arrêt du besoin de vide. L'annulation ou « reset » 56 de la mémorisation 54 sera actif au début de chaque besoin de vide, ou en sortie du régime moteur au ralenti, ou dès que le moteur est arrêté, ou au bout d'une certaine temporisation.

Le signal est ensuite envoyé à une étape d'hystérésis 58, recevant aussi la pression de l'amplificateur 40 et une valeur de décalage 57, pour établir une hystérésis comprenant deux seuils décalés suivant la montée ou la descente du signal, évitant une instabilité de la commande. On obtient à la fin la détermination du besoin de vide 59.

La figure 4 présente en fonction du temps t, successivement en partant du haut, la pression 60 dans l'amplificateur et le seuil critique de pression 62, l'appui sur la pédale de frein 64, l'action d'optimisation 66 du fonctionnement du moteur lui permettant de générer une dépression plus importante, de durée T0 donnée par une temporisation calibrable, et en bas le besoin de vide 68.

Le premier appui sur la pédale de frein 64 au temps t0 entraîne une remontée de pression 60 dans l'amplificateur, qui augmente et passe au-dessus d'un premier seuil critique d'activation S1 au temps t1. Ce passage a pour effet de déclencher à ce moment le besoin de vide 68 demandant une action d'optimisation, qui est maintenue pendant toute la durée de la temporisation T0 se terminant au temps t4. Un ordre de grandeur de la durée de la temporisation T0 est par exemple 2 secondes.

Au temps t3 après l'appui sur le frein 64 et avant la fin de la temporisation 66, l'action d'optimisation sur le moteur ayant été suffisante, la production de vide ayant été plus importante, la pression 60 est redescendue sous le premier seuil S1 et le besoin de vide 68 est retombé.

Au deuxième appui sur le frein 64 au temps t5, la situation de vie du véhicule étant différente par rapport au premier freinage, on constate qu'après la fin au temps t7 de la temporisation T0 et de l'action d'optimisation 68, la pression dans l'amplificateur 60 n'a pas suffisamment diminué pour passer sous le premier seuil d'activation S1. Le moteur n'est pas dans des conditions suffisantes pour générer assez de vide.

Sans un système de mémorisation, le premier seuil d'activation S1 dépassé donnerait un besoin de vide 68 toujours actif, demandant une continuation de l'action d'optimisation 66. A ce moment, bien que le moteur ne puisse pas faire plus de vide, on maintiendrait les inconvénients liés à cette action d'optimisation.

Le système de mémorisation mémorise à la fin de la temporisation T0 au temps t7, la valeur de la pression de l'amplificateur 60 si celle-ci reste sécuritaire. Cette valeur devient alors le nouveau seuil critique d'activation S2.

Par la suite, le seuil critique d'activation est remis systématiquement à zéro à chaque nouveau besoin de vide, ou à chaque sortie de ralenti.

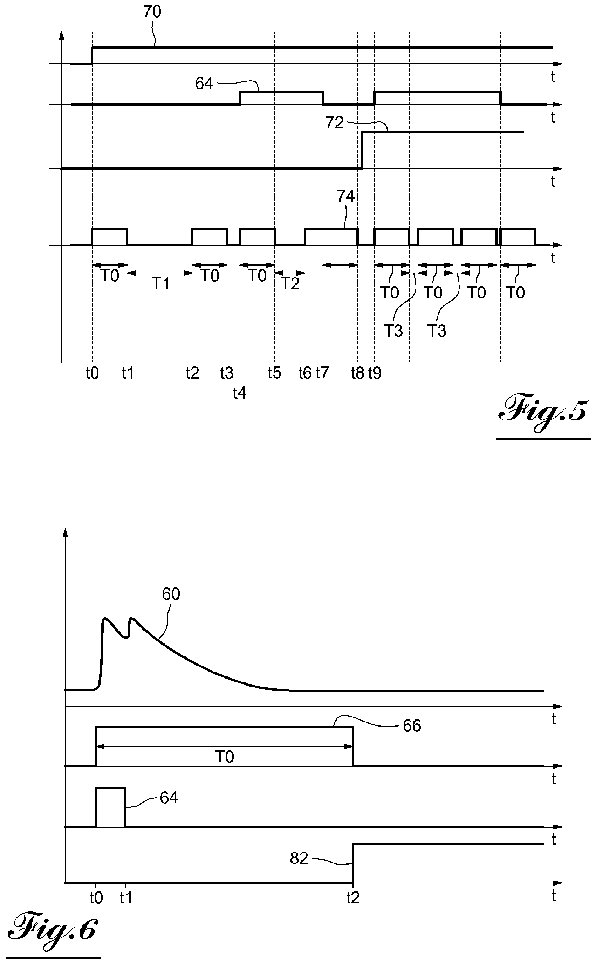

La figure 5 présente la stratégie de l'étape 26 où l'amplificateur ne comporte pas de capteur de pression. Sans ce capteur, il est difficile de savoir précisément le niveau de vide.

On a successivement en partant du haut, la demande d'action d'optimisation brute 70, l'appui sur le frein 64, la vitesse du véhicule 72 et la demande d'action d'optimisation finale 74.

La stratégie fera une estimation du niveau dans l'amplificateur en faisant la différence entre la pression atmosphérique et la pression des tubulures d'admission du moteur. Cette différence sera ensuite comparée à un seuil calibrable représentant le niveau de dépression nécessaire pour garantir une prestation de freinage sécuritaire.

Cette stratégie n'utilisant pas de capteur, est moins fiable car elle n'utilise qu'une estimation de la dépression. Il se peut alors que le conducteur se trouve dans une situation où la stratégie demande en permanence une action d'optimisation, et de ce fait dégrade les prestations du véhicule.

Afin d'éviter une action d'optimisation permanente, une stratégie de cyclage intelligent est mise en place pour optimiser les demandes de délestage en fonction de plusieurs paramètres.

Par rapport à la demande d'action d'optimisation brute 70, la demande d'action d'optimisation finale 74 est effective pendant la temporisation initiale de durée T0.

Entre deux demandes d'action d'optimisation 74, une temporisation d'attente est définie avant de relancer un nouveau cycle d'action d'optimisation. Il y a trois temporisations d'attente qui sont de plus en plus courtes, la première de durée T1 pour une vitesse 72 faible et sans appui sur le frein 64, la deuxième de durée T2 pour une vitesse faible et avec un appui sur le frein, et la troisième T3 pour une vitesse plus importante est un appui sur le frein. Par exemple, concernant ces temporisations d'attente : T1 est de l'ordre de 30 secondes, T2 de l'ordre de 5 secondes, T3 de l'ordre de 1 seconde.

Ces durées de temporisation d'attente décroissantes correspondent à des phases de vie où le besoin de vide de l'assistance du freinage peut être de plus en plus important.

Les demandes d'actions d'optimisation sont systématiquement réinitialisées lors des transitions du freinage, c'est-à-dire lors de son activation ou désactivation.

En revenant sur la figure 2, la deuxième étape de coordination des actions d'optimisation 22, réalise une coordination des demandes d'actions d'optimisation pour l'appliquer à une demande d'optimisation des soupapes à synchronisation variable « VVT » 30, si le moteur en est équipé.

Cette demande d'optimisation des soupapes 30 place ces soupapes dans une position optimale pour que le moteur puisse générer plus de vide. La situation de vie demandant un freinage sécuritaire, les soupapes passent d'une position d'optimisation de la consommation à une position d'optimisation du vide.

La deuxième étape de coordination des actions d'optimisation 22 envoie aussi un signal à un superviseur de ces actions 28, qui sélectionnent un ou plusieurs des facteurs ajustables possibles pour augmenter la production de vide, comme une demande d'augmentation du régime de ralenti 32, une demande de délestage d'accessoires comme l'alternateur ou le compresseur de climatisation 34, ou une demande de délestage de consommateurs électriques 36 qui peut être appliquée à un boîtier de servitude intelligent « BSI » gérant l'ensemble des consommateurs du véhicule.

On peut appliquer alors plusieurs stratégies de production du vide suivant les conditions de vie, comprenant notamment une obtention du plus grand vide possible avec une action sur tous les facteurs en même temps, ou une production modérée de vide avec une sélection des facteurs permettant d'occasionner un minimum de dégradation du fonctionnement du véhicule, après avoir calculé quel niveau de vide supplémentaire donnera ces moyens.

La figure 6 présente successivement en partant du haut, les courbes de pression d'amplificateur 60, d'action d'optimisation 66, d'appui sur le frein 64 et de mémorisation du seuil 82.

Après un appui sur les freins 64 au temps t0 occasionnant une montée de la pression 60, on a mis en oeuvre l'action d'optimisation 66. Un relâchement du frein 64 au temps t1 occasionne une deuxième pointe de pression.

Le résultat de l'action d'optimisation 66 donne au temps t2 une descente de la pression 60 au niveau initial du temps t0. On estime alors que cette durée d'action est suffisante pour rétablir le vide nécessaire afin d'assurer la sécurité du freinage. On mémorise alors le seuil 82 à ce temps t2, la durée depuis le début t0 devient alors la temporisation calibrée T0.

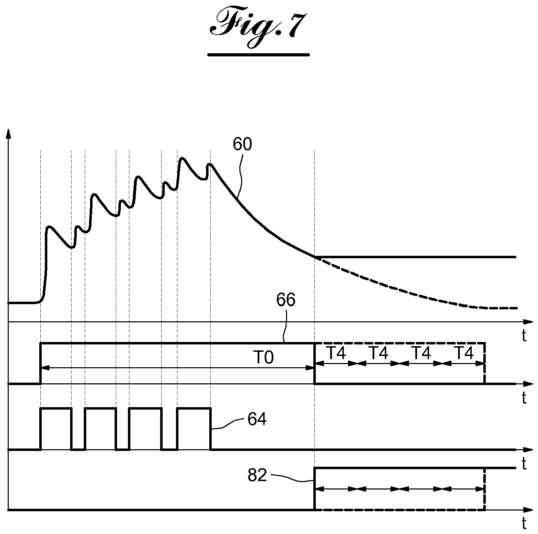

La figure 7 présente successivement les mêmes valeurs pour des freinages répétés représentés par une succession d'appui sur les freins 64. Les freinages étant assez rapprochés, on constate que la pression de l'amplificateur 60 monte à chaque fois, la production de vide du moteur étant insuffisante pour la faire redescendre entre ces freinages.

A chaque front descendant de l'appui sur les freins 64, on ajoute un temps supplémentaire prédéfini T4 à la temporisation calibrée initiale T0, pour prendre en compte les consommations de vide supplémentaires induites par ces demandes de freinage successives. Un ordre de grandeur de la durée du temps supplémentaire T4 est par exemple 1seconde.

On réalise ainsi dans tous les cas de figure un freinage sécuritaire avec un ajustement de la temporisation de l'action d'optimisation, ces actions étant alors limitées à la durée juste nécessaire afin de réduire les désavantages qu'elles peuvent procurer. En particulier, on peut réduire la consommation du véhicule et augmenter le confort pour les passagers.

Ce procédé utilisant seulement des logiciels complémentaires qui doivent être ajoutés dans les calculateurs existants, ne nécessite pas une pompe à vide additionnelle qui ajouterait un certain coût.

## Revendications

1. Procédé d'optimisation du fonctionnement d'un moteur à essence (2) d'un véhicule automobile, permettant d'obtenir une dépression suffisante dans ce moteur (4) appliquée à une assistance du système de freinage (12), lors des faibles vitesses de rotation du moteur, afin d'obtenir un freinage sécuritaire, **caractérisé en ce qu'**à partir d'une détection d'un seuil de vide critique (S1, S2) dans l'amplificateur de l'assistance (12), il applique une action d'optimisation du fonctionnement du moteur en agissant sur un ou plusieurs facteurs ajustables (30, 32, 34, 36) qui permettent de générer une dépression plus importante, pendant un temps réglé par une temporisation (T0) qui est calibrée en fonction d'une durée de récupération de la dépression.

2. Procédé d'optimisation selon la revendication 1, **caractérisé en ce que** les facteurs ajustables comporte au moins l'un des moyens parmi une machine tournante (34) appliquant un couple de charge réglable sur le moteur, comme un alternateur ou un compresseur de climatisation, un élément de contrôle du moteur comme des soupapes à synchronisation variable « VVT » (30) ou une montée de la vitesse du ralenti (32), ou un délestage de la consommation de courant du véhicule (36).

3. Procédé d'optimisation selon la revendication 1 ou la revendication 2, **caractérisé en ce que** le seuil de vide critique (S1) est calibrable.

4. Procédé d'optimisation selon la revendication 3, **caractérisé en ce que** l'amplificateur (12) comportant un capteur de pression (14), après une première action d'optimisation permettant de passer sous un premier seuil de vide critique (S1), un second freinage ayant entraîné une deuxième action d'optimisation, si à la fin de la temporisation de cette deuxième action la pression constatée (60) se trouve au-dessus de ce premier seuil, il fixe alors cette pression constatée si celle-ci reste sécuritaire, comme nouveau seuil de vide critique (S2).

5. Procédé d'optimisation selon l'une quelconque des revendications 1 à 3, **caractérisé en ce que** l'amplificateur (12) ne comportant pas de capteur de pression, il fait une estimation du niveau dans l'amplificateur en calculant la différence entre la pression atmosphérique et la pression des tubulures d'admission du moteur (4), cette différence étant ensuite comparée au seuil de vide calibrable (S1).

6. Procédé d'optimisation selon la revendication 5, **caractérisé en ce que** par rapport à une demande d'action d'optimisation brute (70), la demande d'action d'optimisation finale (74) étant effective pendant la temporisation initiale (T0), il définit des temporisations d'attente avant de relancer un nouveau cycle d'action d'optimisation.

7. Procédé d'optimisation selon la revendication 6, **caractérisé en ce que** les temporisations d'attente comportent dans l'ordre comprenant une durée de plus en plus courte, une première temporisation (T1) pour une vitesse (72) faible et sans appui sur le frein (64), une deuxième temporisation (T2) pour une vitesse faible et avec un appui sur le frein, et une troisième temporisation (T3) pour une vitesse plus importante et un appui sur le frein, les demandes d'actions étant systématiquement réinitialisées lors des transitions du freinage qui est activé ou désactivé.

8. Procédé d'optimisation selon l'une quelconque des revendications précédentes, **caractérisé en ce que** la temporisation est calibrée en fonction d'une durée de récupération (T0) mesurée pendant le fonctionnement du véhicule, permettant de récupérer le niveau de pression initiale (60) après un freinage avec une action d'optimisation.

9. Procédé d'optimisation selon la revendication 8, **caractérisé en ce qu'**à chaque front descendant de l'appui sur les freins (64), on ajoute un temps supplémentaire prédéfini (T4) à la temporisation calibrée initiale (T0).

10. Véhicule automobile disposant d'un moteur à essence (2) produisant un vide pour l'appliquer à une assistance à dépression (12) du système de freinage, **caractérisé en ce qu'**il comporte des moyens mettant en oeuvre un procédé d'optimisation du fonctionnement de ce moteur réalisé suivant l'une quelconque des revendications précédentes.

## Patentansprüche

1. Verfahren zur Optimierung des Betriebs eines Benzinmotors (2) eines Kraftfahrzeugs, das es erlaubt, einen ausreichenden Unterdruck in diesem Motor (4) zu gewinnen, der an eine Unterstützung des Bremssystems (12) bei niedrigen Drehzahlen des Motors angelegt wird, um ein Sicherheitsbremsen zu erhalten, **dadurch gekennzeichnet, dass** es ausgehend von einem Erfassen eines kritischen Vakuumschwellenwerts (S1, S2) in dem Unterstützungsverstärker (12) eine Optimierungsaktion des Betriebs des Motors anwendet, indem es auf einen oder mehrere einstellbare Faktoren (30, 32, 34, 36), die es erlauben, einen höheren Unterdruck zu erzeugen, während einer Zeit, die von einer Verzögerung (T0) geregelt wird, die in Abhängigkeit von einer Rückgewinnungsdauer des Unterdrucks kalibriert ist, einwirkt.

2. Optimierungsverfahren nach Anspruch 1, **dadurch gekennzeichnet, dass** die einstellbaren Faktoren mindestens eines der Mittel aus einer Drehmaschine (34), die ein einstellbares Ladedrehmoment auf den Motor anwendet, wie ein Wechselstromgenerator oder ein Klimaanlagenverdichter, einem Steuerelement des Motors, wie Ventilen mit variabler Synchronisation "VVT" (30), oder einem Ansteigen der Drehzahl des Leerlaufs (32) oder einem Abwerfen des Stromverbrauchs des Fahrzeugs (36), umfassen.

3. Optimierungsverfahren nach Anspruch 1 oder Anspruch 2, **dadurch gekennzeichnet, dass** der kritische Vakuumschwellenwert (S1) kalibrierbar ist.

4. Optimierungsverfahren nach Anspruch 3, **dadurch gekennzeichnet, dass** der Verstärker (12), der einen Druckfühler (14) umfasst, nach einer ersten Optimierungsaktion, die es erlaubt, unter einen ersten kritischen Vakuumschwellenwert (S1) zu gelangen, einem zweiten Bremsen, das eine zweite Optimierungsaktion nach sich gezogen hat, falls am Ende der Verzögerung dieser zweiten Aktion der festgestellte Druck (60) über diesem ersten Schwellenwert liegt, diesen festgestellten Druck, falls dieser sicher bleibt, als neuen kritischen Vakuumschwellenwert (S2) festlegt.

5. Optimierungsverfahren nach einem der Ansprüche 1 bis 3, **dadurch gekennzeichnet, dass** der Verstärker (12), da er keinen Druckfühler umfasst, eine Schätzung des Niveaus in dem Verstärker ausführt, indem er den Unterschied zwischen dem Luftdruck und dem Druck des Saugrohrs des Motors (4) berechnet, wobei dieser Unterschied anschließend mit dem kalibrierbaren Vakuumschwellenwert (S1) verglichen wird.

6. Optimierungsverfahren nach Anspruch 5, **dadurch gekennzeichnet, dass** es im Vergleich zu einer Bruttooptimierungsaktionsanfrage (70), wenn die Endoptimierungsaktionsanfrage (74) während der anfänglichen Verzögerung (T0) effektiv ist, Warteverzögerungen definiert, bevor ein neuer Optimierungsaktionszyklus gestartet wird.

7. Optimierungsverfahren nach Anspruch 6, **dadurch gekennzeichnet, dass** die Warteverzögerungen in der Reihenfolge, die eine immer kürzer werdende Dauer umfasst, eine erste Verzögerung (T1) für eine geringe Drehzahl (72) und ohne Drücken auf die Bremse (64), eine zweite Verzögerung (T2) für eine geringe Drehzahl und mit einem Druck auf die Bremse, und eine dritte Verzögerung (T3) für eine höhere Drehzahl und einen Druck auf die Bremse die Aktionsanfragen systematisch bei Übergängen der Bremsung, die aktiviert oder deaktiviert ist, neu initialisiert werden.

8. Optimierungsverfahren nach einem der vorstehenden Ansprüche, **dadurch gekennzeichnet, dass** die Verzögerung in Abhängigkeit von einer Rückgewinnungsdauer (T0), die während des Betriebs des Fahrzeugs gemessen wird, die es erlaubt, das anfängliche Druckniveau (60) nach einem Bremsen mit einer Optimierungsaktion zurückzugewinnen, kalibriert ist.

9. Optimierungsverfahren nach Anspruch 8, **dadurch gekennzeichnet, dass** bei jeder fallenden Flanke des Drucks auf die Bremsen (64) eine vordefinierte zusätzliche Zeit (T4) zu der anfänglich kalibrierten Verzögerung (T0) hinzugefügt wird.

10. Kraftfahrzeug, das über einen Benzinmotor (2) verfügt, der ein Vakuum erzeugt, um es an eine Unterdruckunterstützung (12) des Bremssystems anzuwenden, **dadurch gekennzeichnet, dass** es Mittel umfasst, die ein Optimierungsverfahren des Betriebs dieses Motors, das nach einem der vorstehenden Ansprüche ausgeführt wird, umsetzen.

## Claims

1. A method for optimizing the operation of a petrol engine (2) of a motor vehicle that makes it possible to obtain a sufficient vacuum in this engine (4), which vacuum is applied to an assistance of the brake system (12) at low rotational speeds of the engine so that emergency braking can be obtained, **characterized in that**, once a critical vacuum threshold (S1, S2) has been detected in the assistance booster (12), the method applies an action to optimize the operation of the engine by influencing one or more adjustable factors (30, 32, 34, 36) that make it possible to generate a greater vacuum, for a time that is regulated by a time period (T0) calibrated according to a vacuum recovery duration.

2. The method for optimizing according to Claim 1, **characterized in that** the adjustable factors comprise at least one of the means from a rotating machine (34) applying a controllable load torque on the engine, such as an alternator or an air-conditioning compressor, a control element of the engine such as variable timing "VVT" valves (30) or an increase of the idle speed (32), or a relieving of the current consumption of the vehicle (36).

3. The method for optimizing according to Claim 1 or Claim 2, **characterized in that** the critical vacuum threshold (S1) is calibratable.

4. The method for optimizing according to Claim 3, **characterized in that** the amplifier (12) comprising a pressure sensor (14), after a first optimization action permitting passing below a first critical vacuum threshold (S1), a second braking having brought about a second optimization action, if at the end of the time period of this second action the recorded pressure (60) is above this first threshold, it then fixes this recorded pressure if the latter remains secure, as new critical vacuum threshold (S2).

5. The method for optimizing according to any one of Claims 1 to 3, **characterized in that** the amplifier (12) not comprising a pressure sensor, it carries out an estimation of the level in the amplifier by calculating the difference between the atmospheric pressure and the pressure of the intake manifolds of the engine (4), this difference being then compared to the calibratable vacuum threshold (S1).

6. The method for optimizing according to Claim 5, **characterized in that** in relation to a gross optimization action demand (70), the final optimization action demand (74) being effective during the initial time period (T0), it defines waiting time periods before restarting a new optimization action cycle.

7. The method of optimizing according to Claim 6, **characterized in that** the waiting time periods comprise in the order including an increasingly short duration, a first time period (T1) for a low speed (72) and without depression on the brake (64), a second time period (T2) for a low speed and with depression on the brake, and a third time period (T3) for a higher speed and depression on the brake, the action demands being systematically reset during transitions of the braking which is activated or deactivated.

8. The method of optimizing according to any one of the preceding claims, **characterized in that** the time period is calibrated as a function of a recovery duration (T0) measured during the operation of the vehicle, permitting the initial pressure level (60) to be recovered after a braking with an optimization action.

9. The method of optimizing according to Claim 8, **characterized in that** at each falling edge of the depression on the brakes (64), a predefined supplementary time (T4) is added to the initial calibrated time period (T0).

10. A motor vehicle having a petrol engine (2) producing a vacuum for applying it to a vacuum assistance (12) of the braking system, **characterized in that** it comprises means implementing a method of optimizing the operation of this engine realized according to any one of the preceding claims.
